# EUROPEAN PATENT SPECIFICATION

(11) **EP 4 065 872 B1**
(45) Date of publication and mention of the grant of the patent: **25.12.2024**
(21) Application number: 20820344.8
(22) Date of filing: 27.11.2020
(51) Int. Cl.: F16L 9/00, E03C 1/29, F16L 21/03

(54) **PIPE CONNECTION ASSEMBLY**
ROHRVERBINDUNGSANORDNUNG
ENSEMBLE DE RACCORDEMENT DE TUYAU

(30) Priority: 29.11.2019 SE 1951373
(43) Date of publication of application: 05.10.2022
(73) Proprietor: Oy Prevex AB, 66900 Nykarleby (FI)
(72) Inventor: STRANDVALL, Sören, 66900 Nykarleby (FI)
(74) Representative: Bergenstråhle & Partners AB
(86) International application number: PCT/EP2020/083578
(87) International publication number: WO 2021/105323

(56) References cited:
- EP-A1- 0 622 577
- DE-A1- 1 409 735
- DE-A1- 3 310 226
- DE-U1- 202009 008 949
- US-A- 2 898 131
- US-A- 3 576 329

## Description

### Technical field

The present invention relates generally to pipe connections and more particularly to a pipe connection assembly with an improved sealing arrangement facilitating the connection procedure.

### Background art

In prior art connections assemblies, it is known to arrange a sealing ring having a circular cross-section between an outer pipe and an inner pipe connected to each other. This sealing ring, or O-ring, is conventionally positioned in a circumferential groove in the inner or outer pipe before the connection procedure and the inner pipe is then inserted into the outer pipe for forming a connection.

One drawback with these prior art connections is that the sealing ring may be displaced before or during the insertion of the inner ring, causing a faulty seal.

The document EP 0622577 A discloses a pipe connection with a sealing ring which is designed as an air-cushion ring and is inserted into an encircling groove of the pipe socket, there being additionally provided a plurality of encircling chambers which are arranged between the external diameter of the spigot and the inner contour of the pipe socket and, in the active position of the pipe connection, are in partially asymetrical and partially symmetrical shapes of different volumes.

### Summary of invention

An object of the present invention is to provide a pipe connection assembly of the kind initially mentioned, wherein the risk of faulty seal is reduced.

The invention is based on the insight that the sealing ring may be provided with a cross-sectional shape different from circular.

According to a first aspect of the invention, there is provided a sealing ring for a pipe assembly according to claim 1.

Furthermore there is provided a pipe assembly according to claim 4.

In a preferred embodiment, the cylindrical wall comprises a spacing means in the form of a plurality of longitudinal ribs provided on the inner surface of the cylindrical wall. The longitudinal ribs are preferably concentrically provided and all have the same thickness.

In a preferred embodiment, an outermost portion of the cylindrical wall is formed as a curved flange of which the inner surface forms the circumferential groove.

In a preferred embodiment, the sealing ring has a cross-sectional shape further comprising a surface facing the groove and has a curvature that is adapted to a curvature of the curved flange of which the inner surface forms the circumferential groove.

In a preferred embodiment, in the cross-sectional shape, the slanting surface ends in a tip.

In a preferred embodiment, the plane surface faces away from the outermost end portion of the pipe.

In a preferred embodiment, the second angle is at least 10 degrees, preferably at least 20 degrees, even more preferably at least 30 degrees smaller than the first angle at some point of the abutment surface.

The pipe assembly according to any one of the preceding claims, wherein the first angle is between 95 degrees and 120 degrees, preferably between 100 and 110 degrees, and most preferably about 105 degrees.

According to a second aspect of the invention, a water trap is provided comprising an inlet portion and an outlet portion, wherein at least the outlet portion comprises a pipe assembly according to the invention.

In a preferred embodiment of the sealing ring, the second angle is at least 10 degrees, preferably at least 20 degrees, even more preferably at least 30 degrees smaller than the first angle at some point of the abutment surface (14e).

In a preferred embodiment of the sealing ring, the first angle is between 95 degrees and 120 degrees, preferably between 100 and 110 degrees, and most preferably about 105 degrees.

### Brief description of drawings

The invention is now described, by way of example, with reference to the accompanying drawings, in which:
Fig. 1 is an overall view of a water trap comprising a pipe assembly according to the invention;
Fig. 2a is a perspective view of an end section of a pipe comprised in a pipe assembly according to the invention;
Fig. 2b is a sectional view through the pipe shown in Fig. 2a;
Fig. 3a is a plan view of a sealing ring comprised in the pipe assembly according to the invention;
Fig. 3b is a cross-sectional view of the sealing ring shown in Fig. 3a taken along the line A-A;
Fig. 3c shows an enlarged view of the cross-sectional shape of the sealing ring in an embodiment of the invention;
Fig 3d shows an enlarged view of the cross-sectional shape of a sealing ring not covered by the claims;
Figs. 4a-c show different stages of insertion of an inner pipe into the pipe shown in Figs. 2a and 2b;
Fig 5 is a sectional view of the pipe shown in Figs. 2a and 2b with an inner pipe inserted therein;
Fig. 6a is a side view of the pipe shown in Figs. 2a and 2b with an outer pipe on the outside thereof; and
Fig. 6b is a section view of the pipe shown in Fig. 6a taken along the line A-A.

### Description of embodiments

In the following, a detailed description of a pipe assembly according the invention, comprising a pipe and a sealing, will be given

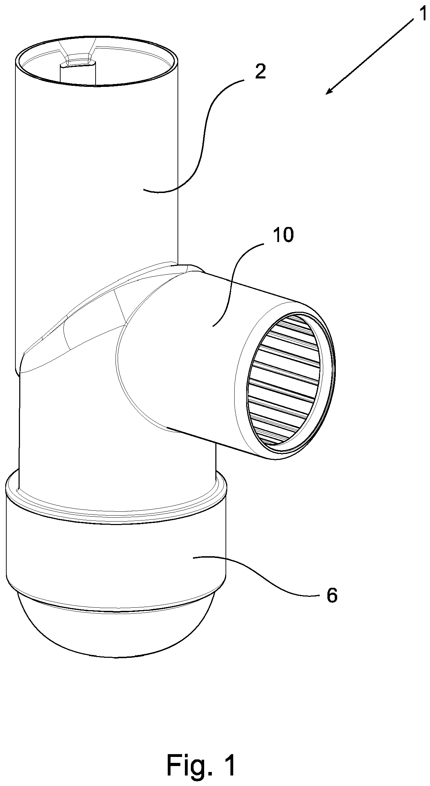

Turning first to Fig. 1, a water trap in the form of a so-called bottle trap is shown, generally designated 1. The water trap 1 comprises a vertical inlet portion 2 in the form of a pipe and a horizontal outlet portion 10 in the form of a pipe. The inlet portion 2 and outlet portion 10 have circular cross-sectional shape. The horizontal outlet portion 10 comprises a tubular pipe with a pipe wall having an outer surface and an inner surface.

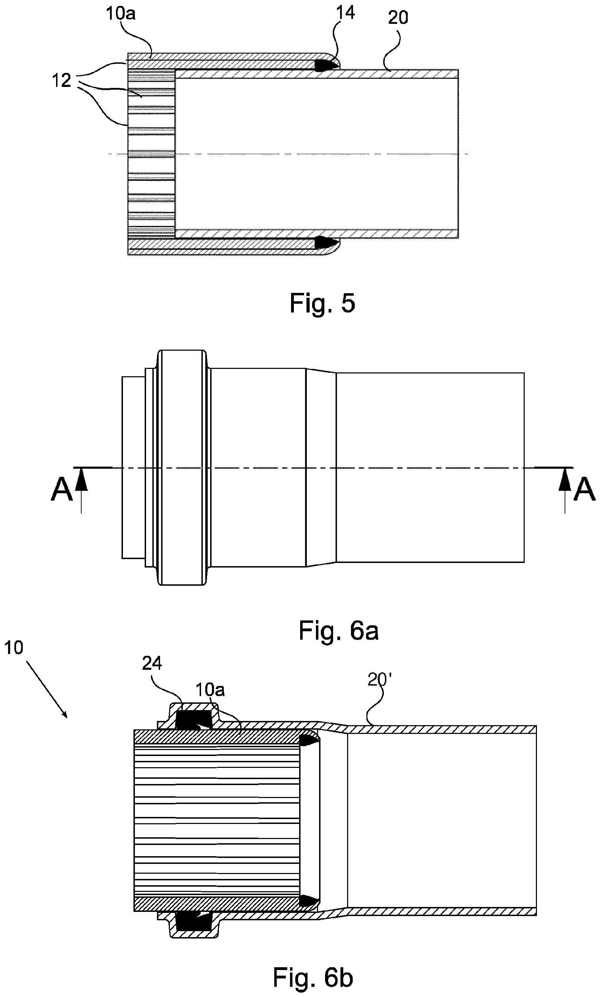

A cup 6 is detachably attached to the lower end of the water trap 1. The outlet portion 10 is adapted to be connected to a connection pipe 20, see Fig. 5, with an outer diameter adapted to allow a press fit between the outlet portion 10 and the connection pipe 20, wherein the outlet portion 10 forms an outer pipe and the connection pipe forms an inner pipe in a pipe assembly.

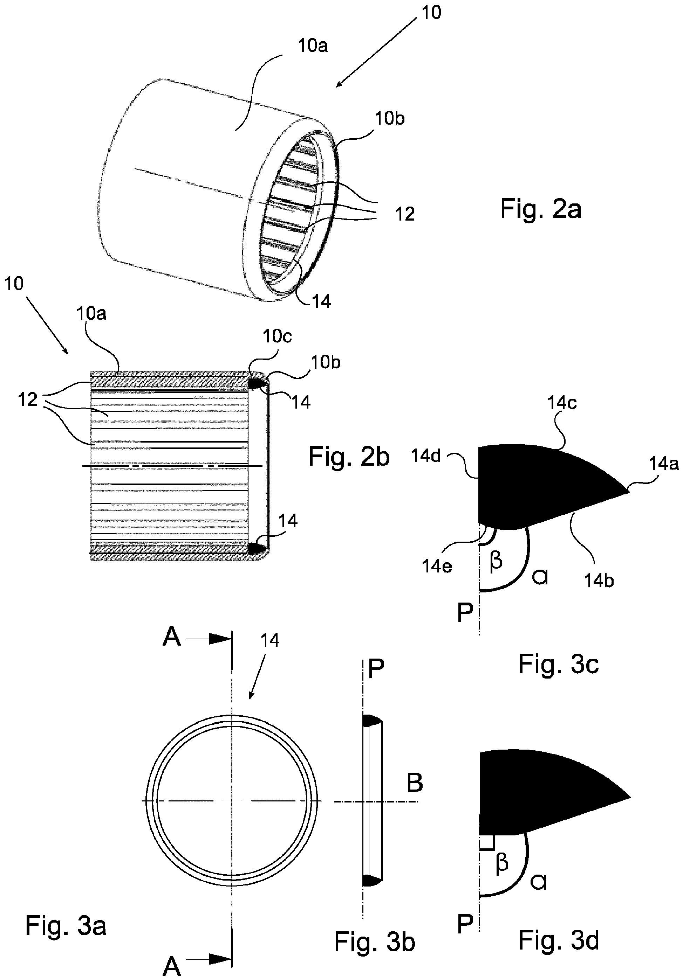

Turning now to Figs. 2a and 2b, an end section of the outlet portion 10 is shown. A spacing means in the form of a plurality of longitudinal ribs 12 is provided on the inner surface of the wall 10a of the outlet portion 10. From the sectional view shown in Fig. 2b it is evident that the pipe wall 10a has a uniform thickness and that the spacing means is concentrically provided on the inner surface. This means that all ribs have the same thickness, i.e., they extend the same distance towards the center axis of the outlet portion 10.

A sealing ring 14 is provided in a circumferential groove 10c in the inner surface of the wall 10a constituting the outlet portion 10. The sealing ring has a cross-sectional shape shown in Figs. 3b and 3c which is adapted for easy insertion of the connection pipe 20 according to Fig. 5. To this end, the cross-sectional shape exhibits a slanting surface 14b which ends in a tip 14a when looking out of the outlet portion 10. The sealing ring 14 has a plane P and the slanting surface 14b is at a first angle α to the plane P of the sealing ring 14, see Fig. 3c. When determining this angle to the plane P, it is the angle between the plane P in the inner of the sealing ring 14 and the plane of the slanting surface 14b. In the shown embodiment, the first angle α is about 105 degrees, but it may vary between 95 degrees and 120 degrees, preferably between 100 and 110 degrees.

The surface 14c of the cross-sectional shape of the sealing ring 14 facing the groove 10c has a shape or curvature that is adapted to the curvature of the circumferential groove 10c. The surface 14d of the cross-sectional shape of the sealing ring 14 facing the ribs 12 is preferably planar.

Finally, an abutment surface 14e is formed between the surface 14d facing the ribs and the slanting surface 14b. The abutment surface 14e is designed to contact the outer surface of an inserted connection pipe 20, see Fig. 5. To this end, the abutment surface 14e has a surface being at a second angle β to the plane P that is smaller than the first angle α. Although in fig. 3c there is a smooth transition from the slanting surface 14b to the abutment surface 14e, the second angle β must be substantially smaller than the first angle α at some point along the abutment surface 14e. In other words, the second angle β should preferably be at least 10 degrees, preferably at least 20 degrees, even more preferably at least 30 degrees smaller than the first angle α at some point of the abutment surface 14e.

By giving the abutment surface this angle, less material in the ring would have to be compressed during insertion of a connection pipe as compared to the case when an essentially planar slanting surface extends all way to the surface facing the ribs 12.

In the embodiment shown in Fig. 3c, the abutment surface is curved, i.e., has a radius. This means that the angle β varies along this abutment surface 14e, from an angle essentially corresponding to the angle α to a smaller angle, in Fig. 3c approximately 80 degrees. This means that the material in the sealing ring 14 easily can be redistributed, making compression easier.

The abutment surface can take other shapes as long as they are covered by the wording of the claims. Fig. 3d shows an example not covered by the claims, where the angle of the slanting surface is the same as in the embodiment of Fig. 3c, while the abutment surface is at essentially right angle to the plane P of the sealing ring 14.

Turning again to Fig. 2b, the outermost portion of the outlet portion 10 is formed as a curved flange 10b of which the inner surface forms the groove 10c. Thus, this groove 10c in which the sealing ring 14 is placed, together with the ribs 12, delimit the movement of the sealing ring 14, i.e., holds the sealing ring in place.

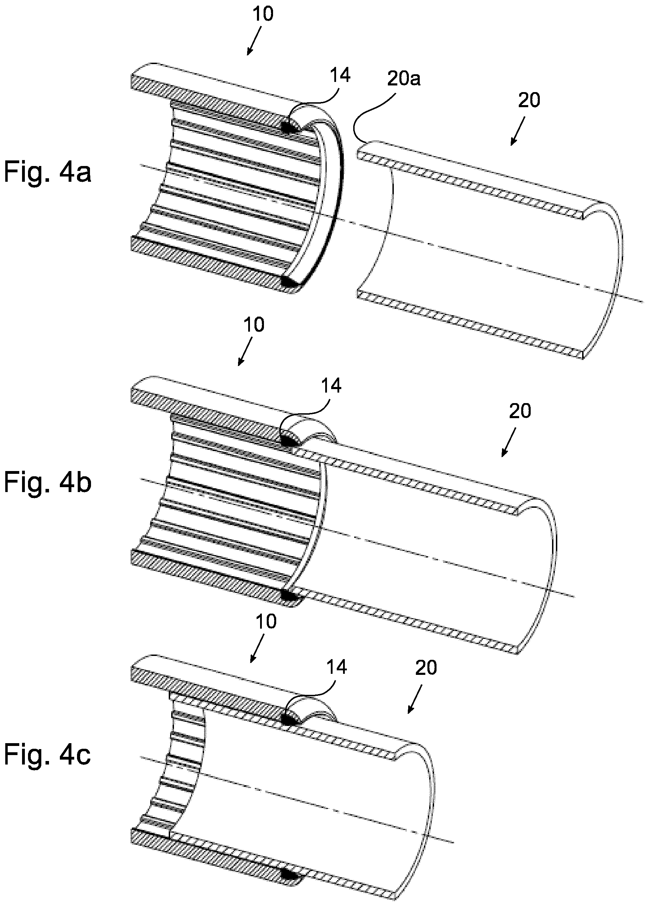

In Figs. 4a-c, it is shown how the circular end surface 20a, see Fig. 4a, of the connection pipe 20 facing the outlet portion 10 during insertion will slide on the slanting surface 14b, see Fig. 4b, when the outlet portion 10 and the connection pipe 20 begin to engage. Thanks to the slanting surface 14b of the sealing ring 14 which ends in a tip 14a, which is surrounded by the outer tip of the curved flange 10b, the insertion of the connection pipe 20 is facilitated. During further insertion, see Fig. 4c, the outer surface of the connection pipe 20 will continue to slide on the abutment surface 14e while slightly compressing the sealing ring 14 to ensure a tight fitting between the outlet portion 10 and the connection pipe 20. Thanks to the shape of the slanting surface 14b, unintentional displacement of the sealing ring 14 is avoided. Thanks to the design with an abutment surface 14e having a surface being at a second angle β to the plane P that is smaller than the first angle α of the slanting surface 14b., this connection pipe 20 will compress the sealing ring 14 to a limited degree. This is particularly useful when the sealing ring is manufactured from a material with a lower degree of flexibility than for example rubber, such as silicone. The stiffer nature of silicone also ensures that the sealing ring 14, once placed in the groove 10c, will be difficult to remove.

In Fig. 5, the connection pipe 20 with an outer diameter corresponding to the distance between diametrically opposite longitudinal ribs 12 is shown. This means that the connection pipe 20 during assembly is brought to slide into the inner of the outlet portion 10.

In Figs. 6a and 6b an alternative connection pipe 20' of a different standard is shown where the connection pipe 20' has an inner diameter corresponding to the outer diameter of the outlet portion 10 and may thus be brought on the outside of the outlet portion 10. This is facilitated by the distal end of the outlet portion 10 having a curved outer surface or flange. The alternative connection pipe 20' is provided with a sealing ring 24, preferably with a lip which in connected state is deflected and rests against the outer surface of the wall 10a of the outlet portion 10. In this way, the flexibility of connecting to connection pipes of different standards is obtained.

Fig. 5 and Figs. 6a and 6b show the possibility of connecting the outlet portion 10 to connection pipes of different standards and thus different diameters. Thanks to the longitudinal ribs 12 which decrease the inner diameter of the outlet portion 10, the wall 10a of the outlet portion 10 can be made with uniform but still small thickness, which from a manufacturing point of view is an advantage, since it is difficult to manufacture a tube with a large or non-uniform thickness. Also, the amount of material is kept down with this solution.

Embodiment of a pipe connection assembly according to the invention have been described. It will be appreciated that the principles thereof are applicable also to other applications than water traps. Thus, for example Fig. 2a shows a general design of a pipe assembly which may be used in any part of a piping system.

Also, although it is preferred to use the inventive concept of the sealing ring together with a pipe with internal longitudinal ribs, it will be appreciated that the claimed pipe assembly is not limited to this design but can also be used with pipes with smooth inner surface, as long as there is a circumferential groove therein.

In the preferred embodiment, the distal end of the outlet portion 10 is formed as a curved flange 10b of which the inner surface forms the groove 10c. The outer surface of the outlet portion may take other shapes as long as the tip 14a of the sealing ring 14 rests in the groove.

## Claims

1. A sealing ring (14) for a pipe assembly having a cross-sectional shape comprising:
a plane surface (14d), defining a plane (P) of the sealing ring,
an essentially planar, slanting surface (14b) being at a first angle (α) to the plane (P) of the sealing ring (14), and
a groove surface (14c), interconnecting the plane surface (14d) and the slanting surface (14b),
the groove surface (14c) opposing the slanting surface (14b) and having a curvature such that it is connected to the slanting surface (14b), and
an abutment surface (14e) opposing the groove surface (14c) and interconnecting the slanting surface (14b) and the plane surface (14d),
**characterized in that**
the abutment surface (14e) comprises a curve defining the interconnection between the slanting surface (14b) and the plane surface (14d), wherein the angle of the abutment surface (14e) to the plane (P) varies along the abutment surface from the first angel (α) to a second angle (β) that is smaller than the first angle (α).

2. The sealing ring (14) according to claim 1, wherein the second angle (β) is at least 10 degrees, preferably at least 20 degrees, even more preferably at least 30 degrees smaller than the first angle (α) at some point of the abutment surface (14e).

3. The sealing ring (14) according to claim 1 or 2, wherein the first angle (α) is between 95 degrees and 120 degrees, preferably between 100 and 110 degrees, and most preferably about 105 degrees.

4. A pipe assembly for a drainage system, comprising:
a pipe (10) with a wall (10a) having an inner surface, the pipe (10) ending in an outermost end portion (10b);
a circumferential groove (10c) in the inner surface of the wall (10a) at the outermost end portion (10b);
a sealing ring (14) according to any of the claims 1 to 3 being arranged in the circumferential groove (10c) in a plane (P) extending perpendicular to the longitudinal direction of the pipe (10);
the plane surface (14d) of the sealing ring defining the plane (P);
the essentially planar, slanting surface (14b) of the sealing ring facing away from the circumferential groove (10c);
the groove surface (14c) of the sealing ring facing the groove (10c) and having a curvature adapted to a curvature of the circumferential groove (10c); and
the abutment surface (14e) of the sealing ring facing away from circumferential groove (10c).

5. The pipe assembly according to claim 4, wherein the cylindrical wall (10a) comprises a spacing means in the form of a plurality of longitudinal ribs (12) provided on the inner surface of the cylindrical wall (10a).

6. The pipe assembly according to claim 5, wherein the longitudinal ribs (12) are concentrically provided, thus all have the same thickness and extend the same distance from the inner surface of the cylindrical wall (10a) towards a center axis of the pipe (10).

7. The pipe assembly according to any one of the claims 4 to 6, wherein the outermost end portion of the cylindrical wall (10a) is formed as a curved flange (10b) of which the inner surface forms the circumferential groove (10c).

8. The pipe assembly according to any one of the claims 4 to 7, wherein, in the cross-sectional shape, the slanting surface (14b) ends in a tip (14a).

9. The pipe assembly according to any one of the claims 4 to 8, wherein the plane surface (14d) faces away from the outermost end portion (10b) of the pipe.

10. The pipe assembly according to any one of the claims 4 to 9, wherein the second angle (β) is at least 10 degrees, preferably at least 20 degrees, even more preferably at least 30 degrees smaller than the first angle (α) at some point of the abutment surface (14e).

11. The pipe assembly according to any one of the claims 4 to 10, wherein the first angle (α) is between 95 degrees and 120 degrees, preferably between 100 and 110 degrees, and most preferably about 105 degrees.

12. A water trap (1) comprising an inlet portion (2) and an outlet portion (10), wherein at least the outlet portion (10) comprises a pipe assembly according to any of claims 4 to 11.

## Patentansprüche

1. Dichtungsring (14) für eine Rohrleitungsbaugruppe, die eine Querschnittsform aufweist, umfassend:
eine ebene Fläche (14d), die eine Ebene (P) des Dichtungsrings definiert,
eine im Wesentlichen ebene, geneigte Fläche (14b), die in einem ersten Winkel (α) zur Ebene (P) des Dichtungsrings (14) steht, und
eine Nutfläche (14c), die die ebene Fläche (14d) und die geneigte Fläche (14b) miteinander verbindet,
wobei die Nutfläche (14c) der geneigten Fläche (14b) gegenüberliegt und eine Krümmung aufweist, so dass sie mit der geneigten Fläche (14b) verbunden ist, und
eine Anschlagfläche (14e), die der Nutfläche (14c) gegenüberliegt und die geneigte Fläche (14b) und die ebene Fläche (14d) miteinander verbindet,
**dadurch gekennzeichnet, dass**
die Anschlagfläche (14e) eine Kurve umfasst, die die Verbindung zwischen der geneigten Fläche (14b) und der ebenen Fläche (14d) definiert, wobei der Winkel der Anschlagfläche (14e) zur Ebene (P) entlang der Anschlagfläche von dem ersten Winkel (α) zu einem zweiten Winkel (β) variiert, der kleiner als der erste Winkel (α) ist.

2. Dichtungsring (14) nach Anspruch 1, wobei der zweite Winkel (β) an einem Punkt der Anschlagfläche (14e) mindestens 10 Grad, bevorzugt mindestens 20 Grad, noch bevorzugter mindestens 30 Grad kleiner als der erste Winkel (α) ist.

3. Dichtungsring (14) nach Anspruch 1 oder 2, wobei der erste Winkel (α) zwischen 95 Grad und 120 Grad, bevorzugt zwischen 100 und 110 Grad und besonders bevorzugt bei etwa 105 Grad liegt.

4. Rohrleitungsbaugruppe für ein Entwässerungssystem, umfassend:
eine Rohrleitung (10) mit einer Wand (10a), die eine Innenfläche aufweist, wobei die Rohrleitung (10) in einem äußersten Endabschnitt (10b) endet;
eine umlaufende Nut (10c) in der Innenfläche der Wand (10a) am äußersten Endabschnitt (10b);
ein Dichtungsring (14) gemäß einem der Ansprüche 1 bis 3, der in der Umfangsnut (10c) in einer Ebene (P) angeordnet ist, die sich senkrecht zur Längsrichtung der Rohrleitung (10) erstreckt;
wobei die ebene Fläche (14d) des Dichtungsrings die Ebene (P) definiert;
wobei die im Wesentlichen ebene, geneigte Fläche (14b) des Dichtungsrings von der umlaufenden Nut (10c) weg zeigt;
wobei die Nutfläche (14c) des Dichtungsrings der Nut (10c) zugewandt ist und eine Krümmung aufweist, die an eine Krümmung der Umfangsnut (10c) angepasst ist; und
wobei die Anschlagfläche (14e) des Dichtungsrings von der umlaufenden Nut (10c) abgewandt ist.

5. Rohrleitungsbaugruppe nach Anspruch 4, wobei die zylindrische Wand (10a) ein Abstandsmittel in Form einer Vielzahl von Längsrippen (12) umfasst, die auf der Innenfläche der zylindrischen Wand (10a) bereitgestellt sind.

6. Rohrleitungsbaugruppe nach Anspruch 5, wobei die Längsrippen (12) konzentrisch angeordnet sind, sodass sie alle die gleiche Dicke aufweisen und sich im gleichen Abstand von der Innenfläche der zylindrischen Wand (10a) in Richtung einer Mittelachse der Rohrleitung (10) erstrecken.

7. Rohrleitungsbaugruppe nach einem der Ansprüche 4 bis 6, wobei der äußerste Endabschnitt der zylindrischen Wand (10a) als ein gekrümmter Flansch (10b) ausgebildet ist, dessen Innenfläche die Umfangsnut (10c) bildet.

8. Rohrleitungsbaugruppe nach einem der Ansprüche 4 bis 7, wobei in der Querschnittsform die geneigte Fläche (14b) in einer Spitze (14a) endet.

9. Rohrleitungsbaugruppe nach einem der Ansprüche 4 bis 8, wobei die ebene Fläche (14d) vom äußersten Endabschnitt (10b) weg zeigt.

10. Rohrleitungsbaugruppe nach einem der Ansprüche 4 bis 9, wobei der zweite Winkel (β) an einem Punkt der Anschlagfläche (14e) mindestens 10 Grad, bevorzugt mindestens 20 Grad, noch bevorzugter mindestens 30 Grad kleiner als der erste Winkel (α) ist.

11. Rohrleitungsbaugruppe nach einem der Ansprüche 4 bis 10, wobei der erste Winkel (α) zwischen 95 Grad und 120 Grad, bevorzugt zwischen 100 und 110 Grad und besonders bevorzugt bei etwa 105 Grad liegt.

12. Wasserfalle (1), die einen Einlassabschnitt (2) und einen Auslassabschnitt (10) umfasst, wobei zumindest der Auslassabschnitt (10) eine Rohrleitungsbaugruppe gemäß einem der Ansprüche 4 bis 11 umfasst.

## Revendications

1. Bague d'étanchéité (14) pour un ensemble tuyau présentant une forme en section transversale comprenant :
une surface plane (14d), définissant un plan (P) de la bague d'étanchéité,
une surface inclinée (14b), sensiblement plane étant selon un premier angle (α) par rapport au plan (P) de la bague d'étanchéité (14), et
une surface (14c) de rainure, interconnectant la surface plane (14d) et la surface inclinée (14b),
la surface (14c) de rainure opposée à la surface inclinée (14b) et présentant une courbure telle qu'elle est reliée à la surface inclinée (14b), et
une surface de butée (14e) opposée à la surface (14c) de rainure et interconnectant la surface inclinée (14b) et la surface plane (14d),
**caractérisée en ce que**
la surface de butée (14e) comprend une courbe définissant l'interconnexion entre la surface inclinée (14b) et la surface plane (14d), dans laquelle l'angle de la surface de butée (14e) par rapport au plan (P) varie le long de la surface de butée depuis le premier angle (α) jusqu'à un second angle (β) qui est plus petit que le premier angle (α).

2. Bague d'étanchéité (14) selon la revendication 1, dans laquelle le second angle (β) est au moins 10 degrés, préférablement au moins 20 degrés, encore plus préférablement au moins 30 degrés plus petit que le premier angle (α) en un certain point de la surface de butée (14e).

3. Bague d'étanchéité (14) selon la revendication 1 ou la revendication 2, dans laquelle le premier angle (α) est entre 95 degrés et 120 degrés, préférablement entre 100 et 110 degrés, et le plus préférentiellement autour de 105 degrés.

4. Ensemble tuyau pour un système de drainage, comprenant :
un tuyau (10) avec une paroi (10a) présentant une surface interne, le tuyau (10) se terminant dans une portion d'extrémité la plus externe (10b) ;
une rainure circonférentielle (10c) dans la surface interne de la paroi (10a) au niveau de la portion d'extrémité la plus externe (10b) ;
une bague d'étanchéité (14) selon l'une quelconque des revendications 1 à 3 étant agencée dans la rainure circonférentielle (10c) dans un plan (P) s'étendant perpendiculairement à la direction longitudinale du tuyau (10) ;
la surface plane (14d) de la bague d'étanchéité définissant le plan (P) ;
la surface inclinée, sensiblement plane (14b) de la bague d'étanchéité étant orientée à l'opposé de la rainure circonférentielle (10c) ;
la surface (14c) de rainure de la bague d'étanchéité faisant face à la rainure (10c) et présentant une courbure adaptée à une courbure de la rainure circonférentielle (10c) ; et
la surface de butée (14e) de la bague d'étanchéité étant orientée à l'opposé de la rainure circonférentielle (10c).

5. Ensemble tuyau selon la revendication 4, dans lequel la paroi cylindrique (10a) comprend un moyen d'espacement sous la forme d'une pluralité de nervures longitudinales (12) prévues sur la surface interne de la paroi cylindrique (10a).

6. Ensemble tuyau selon la revendication 5, dans lequel les nervures longitudinales (12) sont prévues de manière concentrique, ainsi toutes présentent la même épaisseur et s'étendent sur la même distance à partir de la surface interne de la paroi cylindrique (10a) vers un axe central du tuyau (10).

7. Ensemble tuyau selon l'une quelconque des revendications 4 à 6, dans lequel la portion d'extrémité la plus externe de la paroi cylindrique (10a) est formée comme une bride incurvée (10b) dont la surface interne forme la rainure circonférentielle (10c).

8. Ensemble tuyau selon l'une quelconque des revendications 4 à 7, dans lequel, dans la forme en section transversale, la surface inclinée (14b) se termine en une pointe (14a).

9. Ensemble tuyau selon l'une quelconque des revendications 4 à 8, dans lequel la surface plane (14d) est orientée à l'opposé de la portion d'extrémité la plus externe (10b) du tuyau.

10. Ensemble tuyau selon l'une quelconque des revendications 4 à 9, dans lequel le second angle (β) est au moins 10 degrés, préférablement au moins 20 degrés, encore plus préférablement au moins 30 degrés plus petit que le premier angle (α) en un certain point de la surface de butée (14e).

11. Ensemble tuyau selon l'une quelconque des revendications 4 à 10, dans lequel le premier angle (α) est entre 95 degrés et 120 degrés, préférablement entre 100 et 110 degrés, et le plus préférentiellement autour de 105 degrés.

12. Piège à eau (1) comprenant une portion d'entrée (2) et une portion de sortie (10), dans lequel au moins la portion de sortie (10) comprend un ensemble tuyau selon l'une quelconque des revendications 4 à 11.
